# EUROPEAN PATENT APPLICATION

(11) **EP 4 567 605 A1**
(43) Date of publication of application: **11.06.2025**
(21) Application number: 24184259.0
(22) Date of filing: 25.06.2024
(51) Int. Cl.: G06F 11/30, G06F 13/42

(54) **MASTER DEVICE, SLAVE DEVICE, AND OPERATION METHOD THEREOF**

(30) Priority: 04.12.2023 KR 20230173431
(71) Applicant: Samsung Electronics Co., Ltd., Suwon-si, Gyeonggi-do (KR)
(72) Inventor: LEE, Kyungkeun, Suwon-si (KR); KIM, Bumjun, Suwon-si (KR); LEE, Gyeongtaek, Suwon-si (KR); LEE, Seunghan, Suwon-si (KR)
(74) Representative: Marks & Clerk LLP

(57) **Abstract**

An operation method of a slave device that communicates with a master device and stores a status log includes receiving first status information from the master device, generating one or more second status information for the slave device, and updating the status log based on the first status information and the one or more second status information.

## Description

### BACKGROUND

The present disclosure relates to a communication system and, more particularly, to a master device and a slave device included in a communication system, and an operation method thereof.

A communication system may include a master device and a slave device. Typically, the master device controls the slave device. When the slave device is in an abnormal status, the master device may treat the status of the slave device, or control the slave device to minimize the impact of the abnormal status. However, there are situations in which a status of the master device becomes abnormal. In such situations, it may be difficult for the slave device to determine whether its own abnormal status is caused by the status of the master device.

### SUMMARY

It is an aspect to provide a master device and a slave device which exchange status information with each other, and an operation method thereof.

According to an aspect of one or more embodiments, there is provided an operation method of a slave device configured to communicate with a master device and to store a status log, the operation method including receiving first status information from the master device; generating one or more second status information for the slave device; and updating the status log based on the first status information and the one or more second status information.

According to another aspect of one or more embodiments, there is provided an electronic device including memory cells and communicating with an external device through an in-band channel and an out-of-band channel, the electronic device comprising a device status sensor configured to sense a status of the electronic device and generate a first status value based on the status; a status manager configured to receive second status information for the external device through the out-of-band channel, and to output first status information including the first status value to the external device through the out-of-band channel; and a main controller configured to perform a read operation or a write operation to the memory cells based on a command received through the in-band channel.

According to yet another aspect of one or more embodiments, there is provided a master device communicating with a first slave device, the master device comprising a status sensor configured to sense a status of the master device and generate a first status value based on the status; and a baseboard management circuit configured to provide first status information including the first status value to the first slave device when the first status value is out of a reference range.

According to yet another apsect of one or more embodiments, there is provided a communication system comprising a master device including a first status sensor, the master device being configured to generate first status information based on a first status of the master device sensed by the first status sensor; and a slave device including a second status sensor, the slave device being configured to generate second status information based on a second status of the slave device sensed by the second status sensor, wherein the master device and the slave device are configured to exchange the first status information and the second status information with each other.

According to an aspect of one or more embodiments, there is provided an operation method of a slave computer device configured to communicate with a master communication device via a data communication interface and to store a status log, the operation method including receiving first status information from the master computer device; generating one or more second status information for the slave computer device; and updating the status log based on the first status information and the one or more second status information. The first and second status information may include fault indications for one or both of the slave computer device and the master computer device. The status log may be inspected to indicate whether a fault indication for the slave computer device arises as a result of a fault at the slave computer device or at the master computer device.

At least some of the above and other features of the invention are set out in the claims.

### BRIEF DESCRIPTION OF THE DRAWINGS

FIG. 1 is a block diagram illustrating a communication system according to an embodiment.
FIG. 2 is a diagram illustrating an example of a first status log of the communication system of FIG. 1, according to an emboidment.
FIG. 3 is a diagram illustrating an example of a second status log of the communicaton system of FIG. 1, according to an embodiment.
FIG. 4 is a diagram illustrating an example of a method of analyzing a fault cause occurring in the slave device based on the second status log of FIG. 3, according to an embodiment.
FIG. 5 is a flow diagram illustrating an operation of a master device according to an embodiment.
FIG. 6 is a flow diagram illustrating an operation of a slave device according to an embodiment.
FIG. 7 is a flow diagram illustrating an operation of a communication system according to an embodiment.
FIG. 8 is a block diagram illustrating the communication system of FIG. 1 in more detail, according to an embodiment.
FIG. 9 is a block diagram illustrating the communication system of FIG. 8 synchronizing status logs through an in-band channel, according to an embodiment.
FIG. 10 is a block diagram illustrating the communication system of FIG. 8 synchronizing status logs through an out-of-band channel, according to an embodiment.
FIG. 11 is a diagram illustrating an NVMe-MI message including master status information, according to an embodiment.
FIG. 12 is a diagram illustrating an example of an operation code of the communcation system of FIG. 10, according to an embodiment.
FIG. 13 is a diagram illustrating an NVMe-MI message including a plurality of master status information, according to an embodiment.
FIG. 14 is a block diagram illustrating the communication system of FIG. 1, according to an embodiment.
FIG. 15 is a block diagram illustrating a communication system according to an embodiment.

### DETAILED DESCRIPTION OF THE EMBODIMENTS

In the following detailed description, only certain embodiments have been illustrated and described, simply by way of illustration. Details, such as specific configurations and structures, are provided simply to provide a general understanding of the embodiments. Therefore, variations of the embodiments described herein may be performed by those skilled in the art without departing from the technical scope of the present disclosure. Furthermore, descriptions of well-known functions and structures are omitted for clarity and brevity. The configurations in the following drawings or detailed description may be associated with components other than those illustrated in the drawings or described in the detailed description. As used herein, the terms are defined in light of the functions of the present disclosure. The definitions of terms may be determined based on what is described in the detailed description.

The components described by reference to terms, such as driver or block, as used in the detailed description may be implemented in software, hardware, or a combination thereof. For example, software may be machine code, firmware, embedded code, and/or application software. For example, the hardware may include electrical circuits, electronic circuits, processors, microprocessors, microcontrollers, computers, central processing units (CPUs), integrated circuit cores, pressure sensors, inertial sensors, microelectro mechanical systems (MEMS), passive devices, or combinations thereof.

As described above, a communication system may include a master device and a slave device. The slave device may transmit its status information to the master device. The master device may control the slave device based on the status information provided by the slave device. For example, when the slave device is in an abnormal status, the master device may treat the status of the slave device, or control the slave device to minimize the impact of the abnormal status.

On the other hand, when the status of the master device is abnormal, the status of the slave device may also be abnormal due to the status of the master device. However, in general, even when the status information of the master device is abnormal, the master device may not transmit its own status information to the slave device. In this case, it may be difficult for the slave device to determine whether its own abnormal status is caused by the status of the master device.

According to various aspects of one or more embodiments, a communication system may include a master device including a first status sensor, where the master device is configured to generate first status information based on the first status sensor; and a slave device including a second status sensor, where the slave device is configured to generate second status information based on the second status sensor. The master device and the slave device may be configured to exchange the first status information and the second status information with each other.

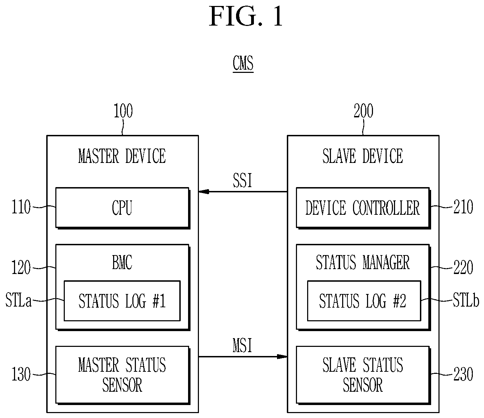

FIG. 1 is a block diagram illustrating a communication system according to an embodiment. Referring to FIG. 1, a communication system CMS may include a master device 100 and a slave device 200. The master device 100 and the slave device 200 may communicate with each other.

The master device 100 may include a central processing unit (CPU) 110, a baseboard management circuit (BMC) 120, and a master status sensor 130.

The central processing unit (CPU) 110 may control various operations of the master device 100. For example, the central processing unit 110 may control components of the master device 100 to transmit commands or instructions to the slave device 200.

The master status sensor 130 may measure a status value associated with various statuses of the master device 100. For example, accoridng to various embodiments, when the master status sensor 130 is a temperature sensor, the master status sensor 130 may measure a temperature value of the master device 100; when the master status sensor 130 is a fan-speed sensor, the master status sensor 130 may measure a rotational speed of a heat dissipation fan included in the master device 100; and when the master status sensor 130 is a voltage sensor, the master status sensor 130 may measure a voltage level of a voltage rail included in the master device 100. However, the scope of the present disclosure is not limited to the types of status values that the master status sensor 130 measures.

The baseboard management circuit (BMC) 120 may generate status information based on one or more status values received from the master status sensor 130. Hereinafter, for a more concise description, the status information generated based on the one or more of the status values received from the master status sensor 130 is referred to as master status information MSI. The baseboard management circuit 120 may include a first status log STLa (described in more detail below).

The slave device 200 may include a device controller 210, a status manager 220, and a slave status sensor 230.

The device controller 210 may control various operations of the slave device 200. For example, the device controller 210 may control components of the slave device 200 in response to commands or instructions provided by the master device 100. In an embodiment, when the slave device 200 is a memory device, the device controller 210 may perform a read operation or a write operation on memory cell included in the slave device 200 in response to a command or instruction provided by the master device 100. In an embodiment, when the slave device 200 is a Graphic Processing Unit (GPU), the device controller 210 may control an Arithmetic and Logical Unit (ALU) included in the slave device 200 in response to a command or instruction provided from the master device 100. However, the scope of the present disclosure is not limited thereto and, in some embodiments, the slave device 200 may be any type of electronic device controlled by the master device 100, such as a Neural Processing Unit (NPU), and the device controller 210 may be any control logic circuit configured to control main functions of the slave device 200.

The slave status sensor 230 may measure status values associated with various statuses of the slave device 200. For example, according to various embodiments, when the slave status sensor 230 is a temperature sensor, the slave status sensor 230 may measure a temperature value of the slave device 200; and when the slave status sensor 230 is a power sensor, the slave status sensor 230 may measure a power consumption of the slave device 200. However, the scope of the present disclosure is not limited to the types of status values that the slave status sensor 230 measures.

The status manager 220 may generate status information based on one or more status values received from the slave status sensor 230. For a more concise description, the status information generated based on the one or more status values provided by the slave status sensor 230 is referred to herein as slave status information SSI.

The status manager 220 may manage status information of the slave device 200. The status manager 220 may include a second status log STLb. For example, the status manager 220 may store the second status log STLb. The second status log STLb may include slave status information SSI.

The status manager 220 may control an operation of the slave device 200 based on the second status log STLb. For example, when the slave status information SSI indicates that the temperature of the slave device 200 is high, the status manager 220 may control the slave device 200 to perform a Dynamic Thermal Throttling (DTT) operation. However, the scope of the present disclosure is not limited to the specific manner in which the status manager 220 controls the operation of the slave device 200.

The status manager 220 may transmit slave status information SSI to the master device 100.

In an embodiment, the master device 100 and the slave device 200 may communicate with each other through an in-band channel and an out-of-band channel. In this case, the status manager 220 may transmit the slave status information SSI to the master device 100 through the in-band channel or the out-of-band channel. That is, the scope of the present disclosure is not limited to the specific manner in which the slave status information SSI is transmitted to the master device 100.

The baseboard management circuit (BMC) 120 may manage the status information of the communication system CMS. That is, the baseboard management circuit 120 may manage the status information of both the slave device 200 and the master device 100.

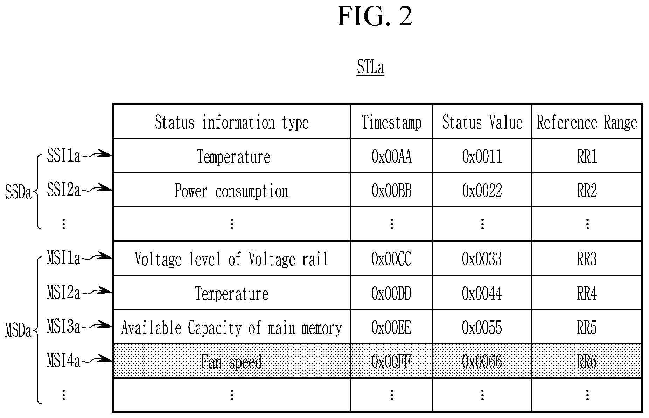

The baseboard management circuit 120 may store the first status log STLa. The first status log STLa may include master status information MSI and slave status information SSI. The configuration of the first status log STLa is described in more detail with reference to FIG. 2 below.

The baseboard management circuit (BMC) 120 may receive the slave status information SSI. The baseboard management circuit 120 may update the first status log STLa based on the received slave status information SSI.

The baseboard management circuit (BMC) 120 may control the operation of the communication system CMS based on the first status log STLa. For example, according to various embodiments, when the master status information MSI indicates that the temperature of the master device 100 is high, the baseboard management circuit 120 may increase the rotational speed of a heat dissipation fan included in the master device 100; and when the slave status information SSI indicates that the temperature of the slave device 200 is high, the baseboard management circuit 120 may throttle the performance of the slave device 200 through the central processing unit 110. However, the scope of this disclosure is not limited to the specific manner in which the baseboard management circuit 120 controls the operation of the communication system CMS based on the first status log STLa.

The baseboard management circuit (BMC) 120 may transmit master status information MSI to the slave device 200. For example, in an embodiment, when the master status information MSI indicates an abnormal status (for example, when a status value measured by the master status sensor 130 being out of reference range), the baseboard management circuit 120 may transmit the master status information MSI to the slave device 200.

In an embodiment, the baseboard management circuit (BMC) 120 may transmit the master status information MSI to the slave device 200 through the in-band channel or the out-of-band channel. That is, the scope of the present disclosure is not limited to the specific manner in which slave status information SSI is transmitted to the master device 100.

The status manager 220 may receive the master status information MSI. The status manager 220 may update the second status log STLb based on the received master status information MSI.

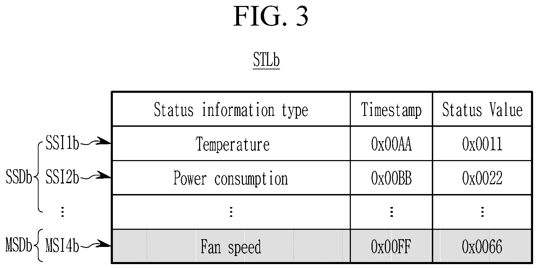

The status manager 220 may manage status information of the master device 100. That is, the status manager 220 may manage status information of the master device 100 as well as status information of the slave devices 200. For example, the second status log STLb may include both slave status information SSI and master status information MSI. The configuration of the second status log STLb is described in more detail with reference to FIG. 3 below.

The status manager 220 may control the operation of the slave device 200 based on the second status log STLb. For example, in an embodiment, the status manager 220 may control the slave device 200 to perform a fault prevention operation based on the second status log STLb.

In an embodiment, when the master status information MSI indicates that the temperature of the master device 100 is high, the status manager 220 may perform a fault prevention operation to throttle the performance of the slave device 200.

In an embodiment, when the master status information MSI indicates that a rotational speed of the heat dissipation fan included in the master device 100 is low, the status manager 220 may throttle the performance of the slave device 200. However, the scope of the present disclosure is not limited thereto, and the status manager 220 may control the slave device 200 to perform various functions, such as Dynamic Thermal Throttling (DTT).

In an embodiment, when the master status information MSI indicates that the voltage level of a voltage rail of the master device 100 is unstable, the status manager 220 may perform a fault prevention operation to back-up the operation being performed on the slave device 200. For example, in an embodiment, when the slave device 200 is a memory device, the status manager 220 may flush data stored in a volatile memory area of the slave device 200 to a non-volatile memory area of the slave device 200.

In an embodiment, when the master status information MSI indicates that a capacity of a main memory of the master device 100 is insufficient, the status manager 220 may perform a fault prevention operation to decrease the input and output rates of the slave device 200.

That is, according to various embodiments, the master device 100 and the slave device 200 may share status information with each other, and may operate based on the shared status information. In other words, the first status log STLa stored in the master device 100 and the second status log STLb stored in the slave device 200 may be synchronized with each other. For example, in an embodiment, the first status log STLa stored in the master device 100 and the second status log STLb stored in the slave device 200 may be synchronized with each other so as to include the same status information. In this case, the slave device 200 may perform the fault prevention operation based on the master status information MSI, thereby a probability of a fault of the slave device 200 may be reduced.

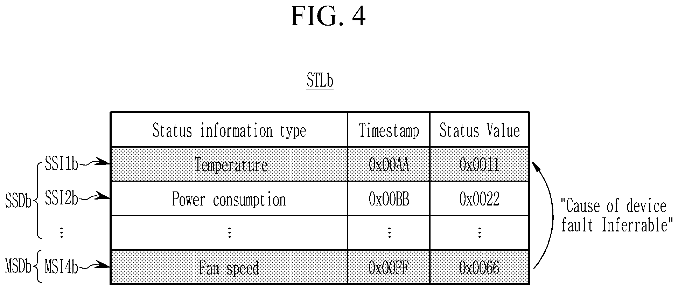

In an embodiment, the second status log STLb may be stored in a non-volatile memory circuit included in the slave device 200. In this case, when the slave device 200 fails, the cause of the fault of the slave device 200 may be readily analyzed based on the second status log STLb. The manner in which the cause of the fault of the slave device 200 is analyzed based on the second status log STLb will be described in more detail with reference to FIG. 4 below.

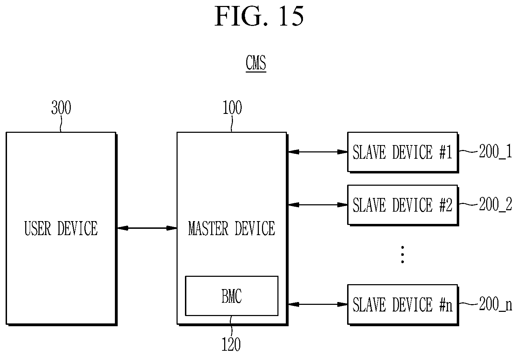

In an embodiment, the master device 100 may be implemented to control the slave device 200 in response to a request from an external user device (not illustrated) accessing the communication system CMS through a network channel. In this case, the master device 100 may be a server device, and the communication system CMS may be a server system. The configuration and operation of the server system will be described in more detail with reference to FIG. 15 below.

FIG. 2 is a diagram illustrating an example of the first status log of FIG. 1, according to an embodiment. Referring to FIGS. 1 and 2, the baseboard management circuit 120 may generate master status information MSI based on the status value provided by the master status sensor 130, and may receive slave status information SSI from the slave device 200.

The first status log STLa may include a plurality of status information. For example, the first status log STLa may include a plurality of slave status information SSI and a plurality of master status information MSI. Hereinafter, for a more concise description, the plurality of slave status information SSI included in the first status log STLa will be referred to as first slave status data SSDa, and the plurality of master status information MSI included in the first status log STLa will be referred to as first master status data MSDa.

The first slave status data SSDa may include first slave status information SSI1a and second slave status information SSI2a. The first and second slave status information SSI1a and SSI2a may indicate different types of statuses for the slave device 200. For example, in an embodiment, the first slave status information SSI1a may indicate a temperature of the slave device 200, and the second slave status information SSI2a may indicate a power consumption of the slave device 200. However, the scope of the present disclosure is not limited to the number and types of slave status information SSI included in the first slave status data SSDa.

The first master status data MSDa may include first master status information MSI1a, second master status information MSI2a, third master status information MSI2a, and fourth master status information MSI4a. The first to fourth master status information MSI1a to MSI4a may indicate different types of statuses for the master device 100. For example, in an embodiment, the first master status information MSI1a may indicate a voltage level of a voltage rail of the master device 100, the second master status information MSI2a may indicate a temperature of the master device 100, the third master status information MSI3a may indicate an available capacity of the main memory of the master device 100, and the fourth master status information MSI4a may indicate a rotational speed of the heat dissipation fan within the master device 100. However, the scope of the present disclosure is not limited to the number and type of master status information MSI included in the first master status data MSDa.

Each of the plurality of status information included in the first status log STLa may include a status information type, a timestamp, a status value, and a reference range. In an embodiment, the reference range may include an upper value and a lower value. For example, the first slave status information SSI1a may include a status information type "Temperature", a timestamp value 0x00AA', a status value '0x0011', and a first reference range RR1 for `temperature' of the slave device 200. Similarly, the fourth master status information MSI4a may include a status information type "Fan speed", a time stamp value '0x00FF', a status value '0x0066', and a sixth reference range RR6 for `fan speed' of the master device 100. For a more concise description, a detailed description of the other status information contained in the first status log STLa is omitted for conciseness.

In an embodiment, the baseboard management circuit 120 may determine that the status information including a status value out of the reference range is indicating an abnormal status. For example, when the reference range (that is, the sixth reference range RR6) of the fourth master status information MSI4a does not include "0x0066," (i.e., the status value 0X0066 is not within the reference range RR6), the baseboard management circuit 120 may determine that the fourth master status information MSI4a is indicating an abnormal status. For example, when the reference range RR6 is 0x0080 to 0x0100, the baseboard management circuti 120 may determine that the fourth master status informaiton MSI4a indicates an abnormal status. In other words, the baseboard management circuit 120 may determine that the "fan speed of the master device 100" corresponding to the fourth master status information MSI4a is in an abnormal status.

In an embodiment, the baseboard management circuit 120 may provide the slave device 200 with the status information that is determined as indicating an abnormal status. For example, the baseboard management circuit 120 may provide the slave device 200 with the fourth master status information MSI4a. In this case, the slave device 200 may update the second status log STLb based on the fourth master status information MSI4a.

In an embodiment, the baseboard management circuit 120 may provide the slave device 200 with only the status information determined as indicating abnormal status. For example, when only the fourth master status information MSI4a is determined as indicating an abnormal status, the baseboard management circuit 120 may provide the only the fourth master status information MSI4a to the slave device 200. However, the scope of the disclosure is not limited thereto and, in an embodiment, the baseboard management circuit 120 may provide all of the first master status data MSDa to the slave device 200 when the status information determined as indicating the abnormal status occurs. For example, the baseboard management circuit 120 may provide all of the first to fourth master status information MSI1a to MSI4a to the slave device 200, even when only the fourth master status information MSI4a is determined as indicating the abnormal status. However, for a more concise description, an embodiment in which the baseboard management circuit 120 provides only the status information determined to be indicative of the abnormal status to the slave device 200 will be representatively described below.

FIG. 3 is a diagram illustrating an example of the second status log of FIG. 1, according to an embodiment. Referring to FIGS. 1 to 3, the status manager 220 may generate slave status information SSI based on a status value provided by the slave status sensor 230, and may receive master status information MSI from the master device 100.

The second status log STLb may include a plurality of status information. For example, in an embodiment, the second status log STLb may include a plurality of slave status information SSI and one or more master status information MSI. Hereinafter, for a more concise description, the plurality of slave status information SSI included in the second status log STLb will be referred to as second slave status data SSDb, and the one or more master status information MSI included in the second status log STLb will be referred to as second master status data MSDb.

The second slave status data SSDb may include first slave status information SSI1b and second slave status information SSI2b. The first and second slave status information SSI1b and SSI2b are similar to the first and second slave status information SSI1a and SSI2a described above, so a detailed description is omitted for conciseness.

The second status log STLb may store master status information MSI provided by the master device 100 (that is, master status information MSI that includes a status value out of a corresponding reference range). For example, the second master status data MSDb may include the fourth master status information MSI4b corresponding to the fourth master status information MSI4a previously described with reference to FIG. 2. In this case, the fourth master status information MSI4b may indicate an abnormal status of the master device 100. However, the scope of the present disclosure is not limited thereto, and the second status log STLb may be implemented to store the same master status information as the first status log STLa.

That is, the status information stored in the first status log STLa and the second status log STLb may be synchronized with each other. For example, in an embodiment, the first slave status data SSDa may be synchronized based on the second slave status data SSDb, and the second master status data MSDb may be synchronized at least in part based on the first master status data MSDa. In this case, the slave device 200 may be able to perform a fault prevention operation based on the status information stored in the second status log STLb. Thus, according to an embodiment, a fault of the slave device 200 caused by the abnormal status of the master device 100 may be prevented. Since the example of the fault prevention operation has been previously described with reference to FIG. 1, a detailed description will be omitted for conciseness.

FIG. 4 is a diagram illustrating an example of a method of analyzing a fault cause occurring in the slave device based on the second status log of FIG. 3, according to an embodiment. Referring to FIGS. 1 to 4, the second status log STLb may include the first and second slave status information SSI1b and SSI2b, and the fourth master status information MSI4b. The first and second slave status information SSI1b and SSI2b and the fourth master status information MSI4b are similar to those previously described with reference to FIG. 3, and a detailed description will be omitted for conciseness.

The first and second slave status information SSI1b and SSI2b, and the fourth master status information MSI4b may be stored in a non-volatile memory circuit of the slave device 200. In this case, the second status log STLb stored in the non-volatile memory circuit of the slave device 200 may be maintained even when a fault occurs in the operation of the slave device 200.

A user or administrator of the communication system CMS (for example, a manufacturer of the slave device 200 or the master device 100) may facilitate analysis of the cause of the fault of the slave device 200 based on the second status log STLb. For example, when time stamps "0x00FF" and "0x00AA" are the same or correspond to very close time points, and the status value "0x0011" is an excessively high value, a user or administrator of the communication system CMS may be able to infer that the abnormal status of the master device 100 has caused a fault in the operation of the slave device 200.

In a more detailed example, the user or administrator of the communication system CMS may determine that the fan speed of the master device 100 was abnormally low at a time point corresponding to the timestamp "0x00FF" based on the fourth master status information MSI4b, and that the temperature of the slave device 200 has abnormally increased at a time point corresponding to the timestamp "0x00AA" based on the first slave status information SSI1b. In this case, the user or administrator of the communication system CMS may be able to infer that the fault in the operation of the slave device 200 was not caused by the fault of the slave device 200 itself, but that a fault from the outside of the slave device 200 (for example, the fan speed of the master device 100) caused the fault in the operation of the slave device 200.

In other words, according to an embodiment, it may be easy to analyze which of the master device 100 and the slave device 200 has caused the fault of the slave device 200. Thus, according to an embodiment, the cost of maintaining and repairing the communication system CMS may be minimized.

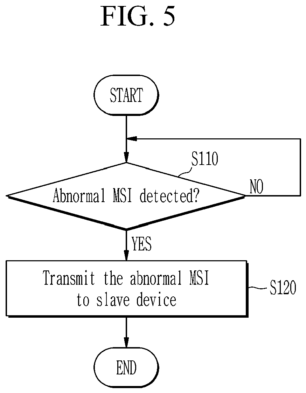

FIG. 5 is a flow diagram illustrating an operation of the master device 100 according to embodiment. Referring to FIGS. 1 to 5, in operation S 110, the master device 100 may determine whether abnormal master status information MSI has been detected. For example, the baseboard management circuit 120 may determine whether status information indicating an abnormal status is included among the plurality of status information for the master device 100 included in the first status log STLa (that is, status information included in the first master status data MSDa). More specifically, the baseboard management circuit 120 may determine whether a status value of each of the master status information MSI included in the first status log STLa is within a corresponding reference range.

When the abnormal master status information MSI is not detected (operation S 110, NO), the operation S 110 may be performed repeatedly. That is, the master device 100 may perform the foregoing operation S 110 repeatedly until the abnormal master status information MSI is detected. In this way, the master device 100 may monitor whether the abnormal master status information MSI has generated.

In an embodiment, when the abnormal master status information MSI is detected (operation S 110, YES), operation S120 may be performed.

In an embodiment, when the abnormal master status information MSI is detected in operation S 110, the master device 100 may update the first status log STLa. That is, the master device 100 may update each of the status information included in the first status log STLa. For example, the master device 100 may collect a status value for each of the master status information MSI through the master status sensor 130 and receive the slave status information SSI from the slave device 200 to update the first status log STLa. However, the scope of the present disclosure is not limited thereto.

In operation S120, the master device 100 may transmit the abnormal master status information MSI to the slave device 200. For example, when the fourth master status information MSI4a is determined as abnormal, the master device 100 may transmit the fourth master status information MSI4a to the slave device 200.

In an embodiment, the master device 100 may be implemented to communicate with a plurality of slave devices. In this case, the master device 100 may be implemented to transmit the abnormal master status information MSI to each of the plurality of slave devices 200. However, the scope of the present disclosure is not limited thereto. The master device 100 implemented to communicate with the plurality of slave devices is described in more detail below with reference to FIG. 15.

For concise description, an embodiment in which the master device 100 transmits one abnormal master status information MSI to the slave device 200 in operation S120 will be representatively described below, but the scope of the present disclosure is not limited thereto. For example, the master device 100 may be implemented to transmit the entire first master status data MSDa (that is, all of the master status information MSI included in the first master status data MSDa) to the slave device 200, even when only one master status information MSI indicates an abnormal status.

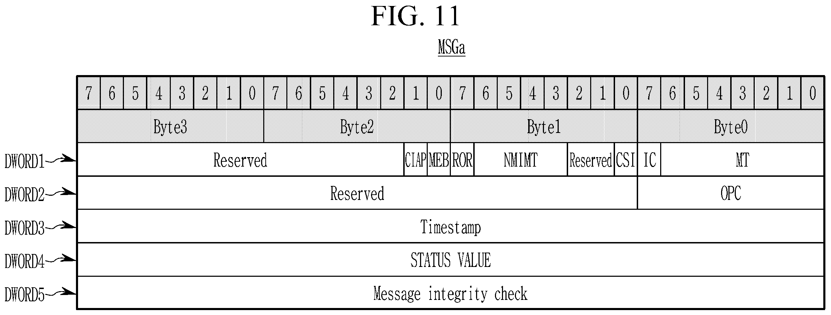

In an embodiment, when the slave device 200 is a solid state drive (SSD), the master device 100 may transmit the master status information MSI in form of a nonvolatile memory express management interface message (NVMe-MI message). The specific manner in which the slave device 200 transmits the master status information MSI in the form of NVMe-MI messages is described in more detail with reference to FIGS. 11 to 13 below.

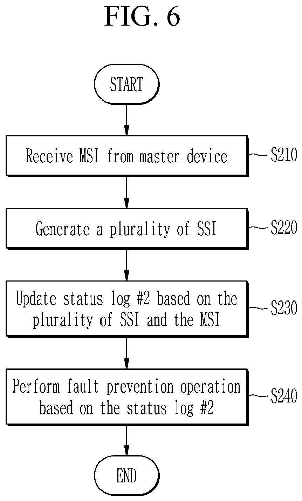

FIG. 6 is a flow diagram illustrating an operation of the slave device according to embodiment. Referring to FIGS. 1 to 6, in operation S210, the slave device 200 may receive master status information MSI from the master device 100. That is, the slave device 200 may receive abnormal master status information MSI from the master device 100. For example, the slave device 200 may receive the fourth master status information MSI4a transmitted by operation S 120 described above.

In operation S220, the slave device 200 may generate a plurality of slave status information SSI. For example, the status manager 220 may collect status values for different statuses of the slave device 200 through the slave status sensor 230, and may generate a plurality of slave status information SSI based on the collected status values.

In operation S230, the slave device 200 may update the second status log STLb based on the master status information MSI and the plurality of slave status information SSI. For example, the status manager 220 may update the second status log STLb based on the master status information MSI received in operation S210 and the plurality of slave status information SSI generated in operation S220. In this case, the time stamps of the status information stored in the second status log STLb may be the same as each other or correspond to the close time points.

In an embodiment, when the master device 100 is implemented to transmit the entire first master status data MSDa to the slave device 200, the slave device 200 may receive the first master status data MSDa at operation S210. However, the scope of the present disclosure is not limited thereto.

In operation S240, the slave device 200 may perform a fault prevention operation based on the second status log STLb. For example, the status manager 220 may perform a fault prevention operation to prevent a fault in the operation of the slave device 200 based on the plurality of status information included in the second status log STLb. In this case, the fault prevention operation may be performed based on the master status information MSI as well as the slave status information SSI, so that the probability of a fault of the slave device 200 may be minimized.

In an embodiment, when the master device 100 is implemented to transmit the entire first master status data MSDa to the slave device 200, the slave device 200 may receive the first master status data MSDa in operation S210, and may update the plurality of master status information MSI included in the first master status data MSDa to the second status log STLb in operation S230. In this case, in operation S240, the slave device 200 may perform the fault prevention operation based on the plurality of master status information MSI, so that the probability of a fault of the slave device 200 may be minimized. However, the scope of the present disclosure is not limited thereto.

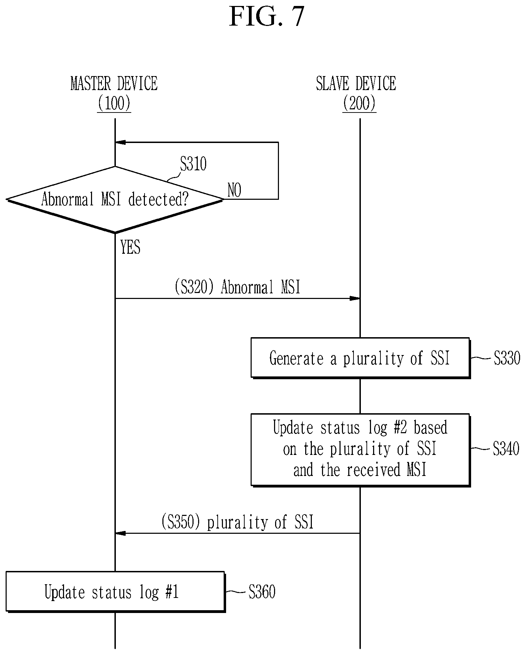

FIG. 7 is a flow diagram illustrating an operation of the communication system according to embodiment. Referring to FIGS. 1 to 7, in operation S310, the master device 100 may determine whether the abnormal master status information MSI has been detected.

When the abnormal master status information MSI is not detected (operation S310, NO), the operation S310 may be performed repeatedly. In an embodiment, when the abnormal master status information MSI is detected (operation S310, YES), operation S320 below may be performed.

In operation S320, the master device 100 may transmit the abnormal master status information MSI to the slave device 200.

Since operations S310 and S320 are similar to operations S110 and S120 described above, a detailed description is omitted for conciseness.

In operation S330, the slave device 200 may generate a plurality of slave status information SSI. In operation S340, the slave device 200 may update the second status log STLb based on the master status information MSI and the plurality of slave status information SSI. Since operations S330 and S340 are similar to operations S220 and S230 described above, a detailed description is omitted for conciseness.

In operation S350, the slave device 200 may transmit the plurality of slave status information SSI to the master device 100. For example, the status manager 220 may transmit the plurality of slave status information SSI generated in operation S330 to the master device 100.

In an embodiment, operation S350 may be performed in response to a request from the master device 100. For example, the slave device 200 may perform operation S350 in response to a message, request, instruction, or command for the slave status information SSI received from the master device 100. However, the scope of the present disclosure is not limited thereto and, in some embodiments, the slave device 200 may be implemented to transmit the plurality of slave status information SSI to the master device 100 in response to the master status information MSI received through foregoing operation S320, even when no message, request, instruction, or command is received from the master device 100. In other words, the scope of the present disclosure is not limited to the specific manner in which the slave device 200 transmits the plurality of slave status information SSI to the master device 100.

In operation S360, the master device 100 may update the first status log STLa. For example, the baseboard management circuit 120 may update the first status log STLa based on the plurality of slave status information SSI provided from the slave device 200.

That is, according to embodiment, since the operations S340 and S360 described above are performed, the first status log STLa and the second status log STLb may be synchronized. In this case, the master device 100 may be able to control the operation of the slave device 200 based on the first status log STLa, and the slave device 200 may be able to perform a fault prevention operation by itself based on the master status information MSI. Thus, according to an embodiment, the probability of a fault of the slave device may be minimized.

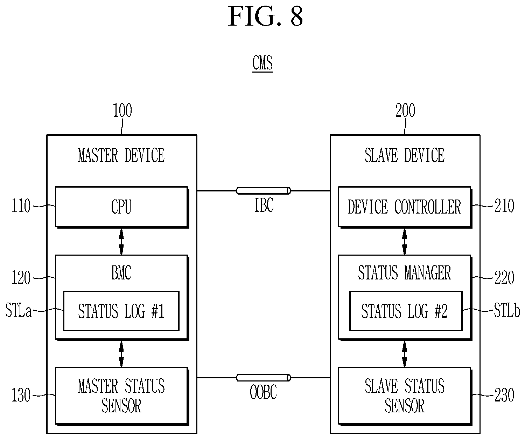

FIG. 8 is a block diagram illustrating the communication system of FIG. 1, in more detail according to an embodiment. Referring to FIGS. 1 to 8, the communication system CMS may include the master device 100 and the slave device 200. The master device 100 and the slave device 200 may communicate with each other through an in-band channel IBC and an out-of-band channel OOBC. The configuration and operation of the master device 100 and the slave device 200 are similar to those previously described with reference to FIGS. 1 to 7, so a detailed description is omitted for conciseness.

The master device 100 may control main operations of the slave device 200 through the in-band channel IBC. For example, when the slave device 200 is a memory device, the master device 100 may perform a read operation or a write operation on a memory cell (not illustrated) included in the slave device 200 through the in-band channel IBC. Similarly, when the slave device 200 is a graphics processing unit, the master device 100 may control the operation of the ALU (not illustrated) included in the slave device 200 through the in-band channel IBC.

In an embodiment, the in-band channel IBC may be implemented based on at least one of Peripheral Component Interconnect express (PCIe), Double Data Rate (DDR), Serial Advanced Technology Attachment (SATA), and NonVolatile Memory express (NVMe) protocols.

In an embodiment, when the slave device 200 is a memory device, the master device 100 may transmit commands and addresses to the slave device 200 through the in-band channel IBC. In this case, in response to the received command and address, the slave device 200 may provide data stored in the memory cell (not illustrated) included in the slave device 200 to the master device 100 through the in-band channel IBC, or store the data provided through the in-band channel IBC in the memory cell (not illustrated) included in the slave device 200. In a more detailed example, when the slave device 200 is a Solid State Drive (SSD), the master device 100 may be able to transmit a nonvolatile memory express command (NMVe command) through the in-band channel IBC.

The slave device 200 may be implemented to transmit Vital Production Data (VPD) to the master device 100 through the out-of-band channel OOBC. For example, in an embodiment, the master device 100 may transmit a VPD request to the slave device 200 through the out-of-band channel OOBC, and the slave device 200 may transmit the VPD to the master device 100 through the out-of-band channel OOBC in response to the VPD request.

In an embodiment, the out-of-band channel OOBC may be implemented based on at least one of Inter Integrated Circuit (I2C), Improved Inter Integrated Circuit (I3C), System Management Bus (SMBus), and Universal Asynchronous Receiver/Transmitter (UART) protocols.

In an embodiment, the communication rate of the in-band channel IBC may be faster than the communication rate of the out-of-band channel OOBC. For example, the frequency of the clock signal used for communication through the in-band channel IBC may be higher than the frequency of the clock signal used for communication through the out-of-band channel OOBC.

In an embodiment, the communication rate of the out-of-band channel OOBC may be 10 Mbit/s or less.

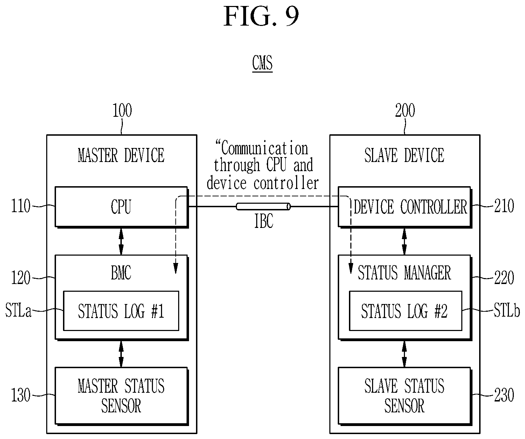

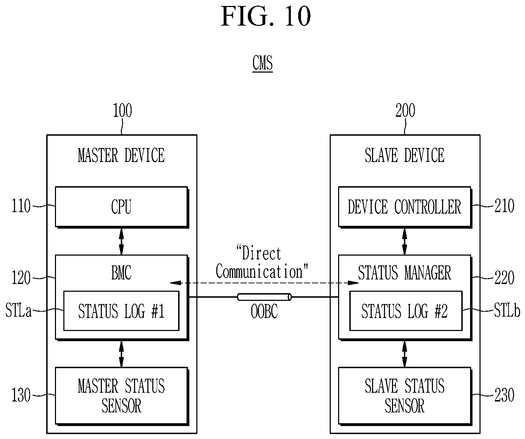

The master device 100 and the slave device 200 may synchronize the first and second status logs STLa and STLb through the in-band channel IBC and/or the out-of-band channel OOBC. For example, the master device 100 and the slave device 200 may exchange status information through the in-band channel IBC, or may exchange status information through the out-of-band channel OOBC. An embodiment in which the master device 100 and the slave device 200 synchronize the first and second status logs STLa and STLb through the in-band channel IBC will be described with reference to FIG. 9 below, and an embodiment in which the master device 100 and the slave device 200 synchronize the first and second status logs STLa and STLb through the out-of-band channel OOBC will be described with reference to FIG. 10 below.

FIG. 9 is a block diagram illustrating the communication system of FIG. 8 synchronizing status logs through the in-band channel, according to an embodiment. Referring to FIGS. 1 to 9, the communication system CMS may include the master device 100 and the slave device 200. The master device 100 and the slave device 200 may exchange status information through the in-band channel IBC. The configuration and operation of the in-band channel IBC, the master device 100, and the slave device 200 are similar to those previously described with reference to FIGS. 1 to 8, so a detailed description is omitted for conciseness.

The baseboard management circuit 120 may transmit master status information MSI to the status manager 220 through the in-band channel IBC. In this case, the master status information MSI may be provided to the status manager 220 through the central processing unit 110 and the device controller 210.

In an embodiment, when the slave device 200 is a Solid State Drive (SSD), the baseboard management circuit 120 may transmit the master status information MSI in the form of an NVMe-MI message. However, the scope of the present disclosure is not limited thereto.

The status manager 220 may transmit the slave status information SSI to the baseboard management circuit 120 through the in-band channel IBC. In this case, the slave status information SSI may be provided to the baseboard management circuit 120 through the device controller 210 and the central processing unit 110.

In an embodiment, in a case in which the slave device 200 is a Solid State Drive (SSD), the device controller 210 may provide the slave status information SSI provided by the status manager 220 to the central processing unit 110 in the form of a log page. For example, the slave device 200 may be implemented to return the log page including the slave status information SSI through the in-band channel IBC in response to a get log page command provided by the master device 100. However, the scope of the present disclosure is not limited thereto.

In an embodiment, when the master device 100 and the slave device 200 exchange status information through the in-band channel IBC, data transmitted through the in-band channel IBC for performing the main operations of the slave device 200 may be transmitted in a time-sharing method through the in-band channel IBC along with the status information. Accordingly, it may be difficult for the main operations of the slave device 200 to be performed while the status information is being transmitted through the in-band channel IBC. For example, when the slave device 200 is a memory device, the master device 100 may not be able to perform a read operation or a write operation on the slave device 200 while the status information is being transmitted through the in-band channel IBC. In this case, the operation performance of the slave device 200 may be reduced. However, the scope of the present disclosure is not limited thereto.

FIG. 10 is a block diagram illustrating the communication system of FIG. 8 synchronizing status logs through the out-of-band channel, according to an embodiment. Referring to FIGS. 1 to 8 and FIG. 10, the communication system CMS may include the master device 100 and the slave device 200. The master device 100 and the slave device 200 may exchange status information through the out-of-band channel OOBC. The configuration and operation of the out-of-band channel OOBC, the master device 100, and the slave device 200 are similar to those previously described with reference to FIGS. 1 to 8, so a detailed description is omitted for conciseness.

The status manager 220 may be directly connected to the baseboard management circuit 120 via the out-of-band channel OOBC. That is, according to an embodiment, the status manager 220 may be directly connected to the out-of-band channel OOBC, without passing through the device controller 210. However, the scope of the present disclosure is not limited to the specific manner in which the status manager 220 is connected to the out-of-band channel OOBC. For example, in an embodiment, the status manager 220 may be connected to the out-of-band channel OOBC through the device controller 210. However, for a more concise description, an embodiment in which the status manager 220 is directly connected to the baseboard management circuit 120 via the out-of-band channel OOBC is representatively described below.

The baseboard management circuit 120 may transmit the master status information MSI directly to the status manager 220 through the out-of-band channel OOBC. That is, the master status information MSI may be provided directly to the status manager 220, without passing through the central processing unit 110 and the device controller 210.

In an embodiment, when the slave device 200 is an SSD, the baseboard management circuit 120 may transmit the master status information MSI in the form of NVMe-MI messages. However, the scope of the present disclosure is not limited thereto.

The status manager 220 may transmit the slave status information SSI to the baseboard management circuit 120 through theout-of-band channel OOBC. In this case, slave status information SSI may be provided directly to baseboard management circuit 120, without passing through the central processing unit 110 and the device controller 210.

In an embodiment, when the slave device 200 is an SSD, the status manager 220 may transmit the slave status information SSI in the form of an NVMe-MI message. However, the scope of this disclosure is not limited thereto and, in an embodiment, the status manager 220 may transmit the slave status information SSI in the form of an NVMe-MI response.

In an embodiment, when the baseboard management circuit 120 and the status manager 220 are directly connected via the out-of-band channel OOBC, the status manager 220 may communicate with the baseboard management circuit 120 via the out-of-band channel OOBC even through the device controller 210 fails. For example, even though a fault occurs in the device controller 210, the status manager 220 may be able to perform the fault prevention operation and/or heal the fault based on the master status information MSI received from the baseboard management circuit 120.

In an embodiment, when the master device 100 and the slave device 200 exchange status information through the out-of-band channel OOBC, data transmitted for performing the main operations of the slave device 200 may be transmitted through a different channel from that of the status information. Thus, according to an embodiment, the master device 100 may perform a read operation or a write operation on the slave device 200 even while status information is being exchanged. In this case, the operation performance of the slave device 200 may be improved. However, the scope of the present disclosure is not limited thereto.

FIGS. 11 to 13 are diagrams illustrating an example of a method of exchanging status information by the master device 100 and the slave device 200, according to an embodiment.

For a more concise description, it is assumed herein that the slave device 200 is an SSD. Further, an embodiment in which the master status information MSI is transmitted from the master device 100 to the slave device 200 through the out-of-band channel OOBC in the form of NVMe-MI message will be representatively described. However, the scope of the present disclosure is not limited thereto, and the slave device 200 may transmit the slave status information SSI to the master device 100 in a similar manner.

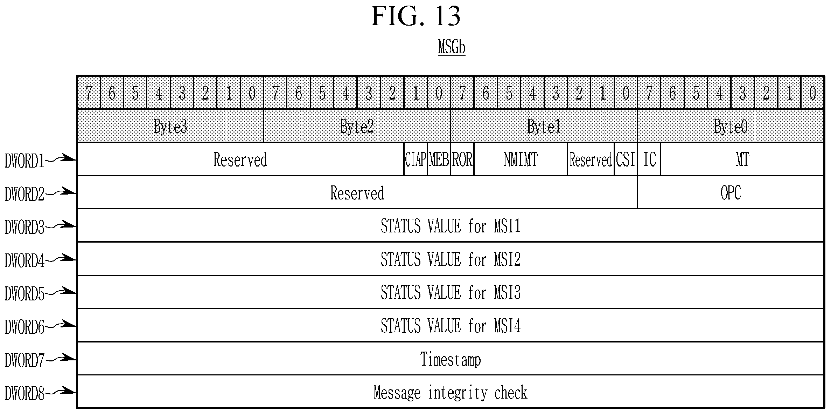

Hereinafter, an embodiment in which one status information is transmitted via a single NVMe-MI message will be described with reference to FIG. 11, and an embodiment in which a plurality of status information is transmitted via a single NVMe-MI message will be described with reference to FIG. 13.

FIG. 11 is a diagram illustrating an NVMe-MI message including the master status information. Referring to FIGS. 1 to 8, 10, and 11, the master device 100 may transmit a first message MSGa including the master status information MSI to the slave device 200.

The first message MSGa may have an NVMe-MI message format. For example, the first message MSGa may include a plurality of DWORDs. More specifically, the first message MSGa may include a first DWORD DWORD 1, a second DWORD DWORD2, a third DWORD DWORD3, a fourth DWORD DWORD4, and a fifth DWORD DWORD5. However, the scope of the present disclosure is not limited to the number of DWORDs included in the first message MSGa.

The first DWORD DWORD 1 and the second DWORD DWORD2 of the first message MSGa may be NVMe-MI message headers for transmitting the master status information MSI.

For example, starting from a Byte0, the first DWORD DWORD1 may include a message type MT, an integrity check bit IC, a command slot identifier bit CSI, an NVMe-MI message type NMIMT, a request or response bit ROR, a management endpoint buffer bit MEB, and a command initiated auto pause bit CIAP. In this case, the message type MT and integrity check bits IC may be defined based on the MCTP protocol. However, the scope of the present disclosure is not limited thereto.

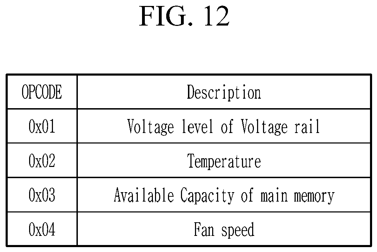

The second DWORD DWORD2 may include an opcode (OPC; opcode). The opcode OPC may indicate the type of the master status information MSI that the first message MSGa includes. For example, the opcode OPC may indicate that the first message MSGa includes the master status information MSI corresponding to "temperature". A specific implementation of the opcode OPC is described in more detail below with reference to FIG. 12.

The third to fourth DWORDs DWORD3 to DWORD4 may represent the master status information MSI. For example, the third DWORD DWORD3 may represent a timestamp included in the master status information MSI, and the fourth DWORD DWORD4 may represent a status value included in the master status information MSI. However, the scope of the present disclosure is not limited to the number of bits representing the timestamp and the status value. For example, the first message MSGa may represent the timestamp and the status value with a number of bits, such as 8 bits, 16 bits or 64 bits.

The fifth DWORD DWORD5 may include a message integrity check code. For example, the fifth DWORD DWORD5 may include a cyclic redundancy check code (CRC code) that is used when the integrity check bit IC is '1'. However, the scope of the present disclosure is not limited thereto.

FIG. 12 is a diagram illustrating an example of the opcode (OPC) of FIG. 10, according to an embodiment. Referring to FIGS. 1 to 8, and FIGS. 10 to 12, the code length of the opcode OPC may be 8 bits. However, the scope of the present disclosure is not limited to the code length of the opcode OPC.

The opcode OPC may represent the type of status information previously described with reference to FIGS. 2 and 3. For example, the slave device 200 may identify the type of status information of the master status information MSI included in the first message MSGa based on the opcode OPC.

In an embodiment, when the opcode OPC is '0x01', the master status information MSI included in the first message MSGa may indicate the voltage level of the voltage rail. Similarly, when the opcode OPC is '0x02', the master status information MSI included in the first message MSGa may indicate a temperature of the master device 100. In this way, the opcode OPC may indicate different types of status information based on the opcode OPC value.

For a more concise description, an embodiment in which the opcode OPC indicates a type of status information of the master status information MSI has been representatively described with reference to FIGS. 10 and 11. However, the scope of the present disclosure is not limited thereto, and the information represented by the opcode OPC may be defined in a vendor specific manner.

FIG. 13 is a diagram illustrating an NVMe-MI message including a plurality of master status information. Referring to FIGS. 1 to 8, and FIGS. 10 and 13, the master device 100 may transmit a second message MSGb including a plurality of master status information MSI to the slave device 200. For example, the master device 100 may transmit a plurality of master status information MSI included in the first master status data MSDa to the slave device 200 in the form of a second message MSGb, even though one master status information MSI indicates an abnormal status. Hereinafter, for a more concise description, an embodiment in which the second message MSGb includes first master status information MSI1, second master status information MSI2, third master status information MSI3, and fourth master status information MSI4 will be representatively described.

The second message MSGb may have a format of an NVMe-MI message. For example, the second message MSGb may include a plurality of DWORDs. In a more detailed example, the second message MSGb may include first to eighth DWORDs DWORD 1 to DWORD8. However, the scope of the present disclosure is not limited to the number of DWORDs included in the second message MSGb.

The first DWORD DWORD1 and the second DWORD DWORD2 of the second message MSGb may be NVMe-MI message headers for transmitting master status information MSI. The first DWORD DWORD1 of the second message MSGb is similar to the first DWORD DWORD1 of the first message MSGa described before, so a detailed description is omitted for conciseness.

The second DWORD DWORD2 may include an operation code OPC. In this case, the operation code OPC may indicate that the second message MSGb includes a plurality of master status information MSI. For example, the slave device 200 may identify based on the opcode OPC that the second message MSGb includes the plurality of master status information MSI.

The third to seventh DWORDs DWORD3 to DWORD7 may represent the plurality of master status information MSI. For example, the third to sixth DWORDs DWORD3 to DWORD6 may represent status values of the first to fourth master status information MSI1 to MSI4, respectively, and the seventh DWORD DWORD7 may represent a timestamp of the first to fourth master status information MSI1 to MSI4. However, the scope of the present disclosure is not limited to the number of bits representing the timestamp and the status value. For example, the second message MSGb may represent the timestamp and the status value with a number of bits, such as 8 bits, 16 bits or 64 bits.

Further, for a more concise description, in FIG. 13, an embodiment in which the time stamps for the first to fourth master status information MSI1 to MSI4 are included in a single DWORD is representatively described, but the scope of the present disclosure is not limited thereto. For example, the second message MSGb may represent each of the timestamps for the first to fourth master status information MSI1 to MSI4 in a different DWORD.

In an embodiment, the order of the third to seventh DWORDs DWORD3 to DWORD7 may be predetermined. For example, the status values of the first to fourth master status information MSI1 to MSI4 may be transmitted to the slave device 200 based on the order of the DWORDs. In this case, the slave device 200 may respond to the opcode OPC to parse the status values of the first to fourth master status information MSI1 to MSI4 from the second message MSGb according to the predetermined order.

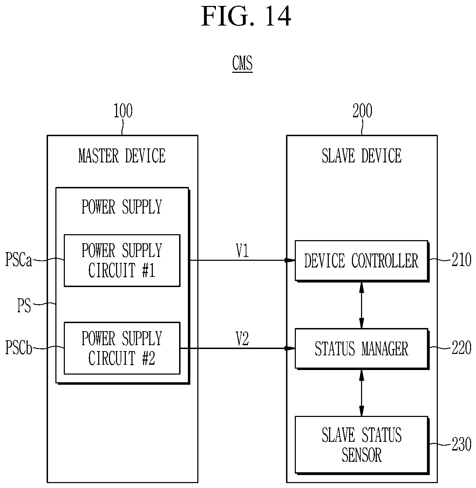

FIG. 14 is a block diagram illustrating a communication system, according to an embodiment. Referring to FIGS. 1 to 14, the communication system CMS may include the master device 100 and the slave device 200. The slave device 200 may include the device controller 210, the status manager 220, and the slave status sensor 230. The configuration and the operation of the slave device 200 have been previously described with reference to FIG. 1, so a detailed description will be omitted for conciseness.

The master device 100 may include a power supply PS. The power supply PS may include a first power supply circuit PSCa and a second power supply circuit PSCb.

The first power supply circuit PSCa may provide a first power supply voltage V1 to the device controller 210. The second power supply circuit PSCb may provide a second power supply voltage V2 to the status manager 220. In an embodiment, the second power supply voltage V2 may have a voltage level equal to or lower than the first power supply voltage V1.

In an embodiment, the first power supply voltage V1 may be 12 V or 3.3 V. However, the scope of the present disclosure is not limited thereto.

In an embodiment, the second power supply voltage V2 may be 3.3 V. However, the scope of the present disclosure is not limited thereto.

In an embodiment, the first power supply circuit PSCa and the second power supply circuit PSCb may operate independently of each other. For example, even though the first power supply circuit PSCa fails, the second power supply circuit PSCb may provide the second power supply voltage V2 to the status manager 220. Thus, according to an embodiment, even though the first power supply circuit PSCa fails, the master device 100 and the slave device 200 may communicate with each other through the out-of-band channel OOBC.

FIG. 15 is a block diagram illustrating a communication system according to an embodiment. Referring to FIGS. 1 to 15, the communication system CMS may include a master device 100, first to n^{th} slave devices 200_1 to 200_n, and a user device 300.

In an embodiment, the master device 100 may be a server device. In this case, the master device 100 may communicate with the user device 300 through a network interface. That is, the communication system CMS may be a server system operating in response to a request from the user device 300.

The master device 100 may control the first to n^{th} slave devices 200_1 to 200_n based on a request from the user device 300. For example, when the first to n^{th} slave devices 200_1 to 200_n are memory devices, the master device 100 may store data provided by the user device 300 in the first to n^{th} slave devices 200_1 to 200_n.

In an embodiment, the user device 300 may be any type of electronic device that provides a user interface, such as a desktop, tablet PC, laptop, smartphone, or the like. However, the scope of the present disclosure is not limited thereto.

The master device 100 may include a baseboard management circuit (BMC) 120. The baseboard management circuit 120 may manage the statuses of the first to n^{th} slave devices 200_1 to 200_n. For example, the baseboard management circuit 120 may receive slave status information SSI from each of the first to n^{th} slave devices 200_1 through 200_n. The baseboard management circuit 120 may control an operation of each of the first to n^{th} slave devices 200_1 to 200_n based on the received slave status information SSI. For example, when the master device 100 receives slave status information SSI from the first slave device 200_1 indicating a high temperature, the baseboard management circuit 120 may control the master device 100 to store the data received from the user device 300 in the second slave device 200_2 instead of the first slave device 200_1. However, the scope of the present disclosure is not limited thereto.

In an embodiment, the baseboard management circuit 120 may manage status information of the master device 100. For example, the baseboard management circuit 120 may generate master status information MSI, similar to that previously described with reference to FIGS. 1 to 14. When the master status information MSI indicates an abnormal status, the baseboard management circuit 120 may transmit the master status information MSI indicating the abnormal status to each of the first to n^{th} slave devices 200_1 to 200_n. In this case, each of the first to n^{th} slave devices 200_1 to 200_n may store the master status information MSI indicating the abnormal status.

When a fault occurs in the status of the master device 100, each of the first to n slave devices 200_1 to 200_n may be able to perform a fault prevention operation based on the received master status information MSI. Thus, according to an embodiment, the probability of a fault occurring in each of the first to n^{th} slave devices 200_1 to 200_n may be minimized.

Furthermore, according to an embodiment, even though a fault occurs in any of the first to n^{th} slave devices 200_1 to 200_n, it may be possible to easily determine whether the fault occurred due to the status of the master device 100. Therefore, according to an embodiment, maintenance and management of each of the first to n^{th} slave devices 200_1 to 200_n may be more facilitated.

The above are the specific embodiments for implementing the present disclosure. The disclosure may include not only the embodiments described above, but also embodiments that are simply redesigned or can be easily modified. The disclosure will also include techniques that can be easily modified and practiced by using the embodiments. Accordingly, the scope of the present disclosure should not be limited to the above-described embodiments, but should be defined by the following patent claims as well as those equivalents of the claims of the present disclosure.

Embodiments are set out in the following clauses.
1. An operation method of a slave device configured to communicate with a master device and to store a status log, the operation method comprising:
   receiving first status information from the master device;
   generating one or more second status information for the slave device; and
   updating the status log based on the first status information and the one or more second status information.
2. The operation method of clause 1, further comprising:
   performing a fault prevention operation for the slave device based on the first status information.
3. The operation method of clause 2, wherein:
   the fault prevention operation is a performance throttling operation for the slave device.
4. The operation method of clause 1, wherein:
   the status log is stored in a non-volatile memory circuit included in the slave device.
5. The operation method of clause 1, further comprising:
   transmitting the one or more second status information to the master device.
6. The operation method of clause 5, wherein the slave device is configured to:
   receive the first status information from the master device through an out-of-band channel; and
   transmit the one or more second status information to the master device through the out-of-band channel.
7. The operation method of clause 6, wherein the out-of-band channel is implemented based on at least one of an Inter Integrated Circuit (I2C) protocol, an Improved Inter Integrated Circuit (I3C) protocol, a System Management Bus (SMBus) protocol, and a Universal Asynchronous Receiver/Transmitter (UART) protocol.
8. The operation method of clause 6, wherein:
   the slave device is a Solid State Drive (SSD), and
   the slave device is configured to receive the first status information as a NonVolatile Memory express Management Interface message from the out-of-band channel.
9. The operation method of clause 8, wherein:
   the first status information includes:
   a status value;
   an operation code indicating a type of status information represented by the status value; and
   a timestamp corresponding to a time point at which the status value was measured.
10. The operation method of clause 8, wherein:
   the slave device further includes a memory cell, and
   the slave device is configured to perform a read operation or a write operation to the memory cell through an in-band channel that is different from the out-of-band channel.
11. The operation method of clause 10, wherein:
   a communication speed of the in-band channel is higher than a communication speed of the out-of-band channel.
12. The operation method of clause 11, wherein:
   the in-band channel is implemented based on at least one of a Peripheral Component Interconnect express (PCIe) protocol, a Double Data Rate (DDR) protocol, a Serial Advanced Technology Attachment (SATA) protocol, and aNon Volatile Memory express (NVMe) protocol.
13. An electronic device including memory cells and communicating with an external device through an in-band channel and an out-of-band channel, the electronic device comprising:
   a device status sensor configured to sense a status of the electronic device and generate a first status value based on the status;
   a status manager configured to receive second status information for the external device through the out-of-band channel, and to output first status information including the first status value to the external device through the out-of-band channel; and
   a main controller configured to perform a read operation or a write operation to the memory cells based on a command received through the in-band channel.
14. The electronic device of clause 13, wherein:
   a communication speed of the in-band channel is higher than a communication speed of the out-of-band channel.
15. The electronic device of clause 13, wherein:
   the electronic device is a Solid State Drive (SSD), and
   the out-of-band channel is implemented based on at least one of an Inter Integrated Circuit (I2C) protocol, an Improved Inter Integrated Circuit (I3C) protocol, a System Management Bus (SMBus) protocol, and a Universal Asynchronous Receiver/Transmitter (UART) protocol, and
   the in-band channel is implemented based on at least one of a Peripheral Component Interconnect express (PCIe) protocol, a Double Data Rate (DDR) protocol, a Serial Advanced Technology Attachment (SATA) protocol, and a NonVolatile Memory express (NVMe) protocol.
16. The electronic device of clause 15, wherein:
   the main controller is configured to receive the command as a NonVolatile Memory express command, and
   the status manager is configured to receive the first status information as a NonVolatile Memory express Management Interface message.
17. The electronic device of clause 13, wherein the status manager is configured to control an operation of the main controller based on the first status information and the second status information.
18. The electronic device of clause 13, wherein:
   the status manager is configured to operate based on a first voltage received from the external device, and
   the main controller is configured to operate based on a second voltage received from the external device, the second voltage being higher than the first voltage.
19. A master device communicating with a first slave device, the master device comprising:
   a status sensor configured to sense a status of the master device and generate a first status value based on the status; and
   a baseboard management circuit configured to provide first status information including the first status value to the first slave device when the first status value is out of a reference range.
20. The master device of clause 19, wherein:
   the master device is further configured to communicate with a plurality of slave devices including the first slave device, and
   the master device is further configured to provide the first status information to each of the plurality of slave devices when the first status value is out of the reference range.
21. A communication system comprising:
   a master device including a first status sensor, the master device being configured to generate first status information based on a first status of the master device sensed by the first status sensor; and
   a slave device including a second status sensor, the slave device being configured to generate second status information based on a second status of the slave device sensed by the second status sensor,
   wherein the master device and the slave device are configured to exchange the first status information and the second status information with each other and operate based on the first status information and the second status information.

## Claims

1. An operation method of a slave device configured to communicate with a master device and to store a status log, the operation method comprising:
receiving first status information from the master device;
generating one or more second status information for the slave device; and
updating the status log based on the first status information and the one or more second status information.

2. The operation method of claim 1, further comprising:
performing a fault prevention operation for the slave device based on the first status information.

3. The operation method of claim 2, wherein:
the fault prevention operation is a performance throttling operation for the slave device.

4. The operation method of any previous claim, wherein:
the status log is stored in a non-volatile memory circuit included in the slave device.

5. The operation method of any previous claim, further comprising:
transmitting the one or more second status information to the master device.

6. The operation method of claim 5, wherein the slave device is configured to:
receive the first status information from the master device through an out-of-band channel; and
transmit the one or more second status information to the master device through the out-of-band channel.

7. The operation method of claim 6, wherein the out-of-band channel is implemented based on at least one of an Inter Integrated Circuit (I2C) protocol, an Improved Inter Integrated Circuit (I3 C) protocol, a System Management Bus (SMBus) protocol, and a Universal Asynchronous Receiver/Transmitter (UART) protocol.

8. The operation method of claim 6, wherein:
the slave device is a Solid State Drive (SSD), and
the slave device is configured to receive the first status information as a NonVolatile Memory express Management Interface message from the out-of-band channel.

9. The operation method of claim 8, wherein:
the first status information includes:
a status value;
an operation code indicating a type of status information represented by the status value; and
a timestamp corresponding to a time point at which the status value was measured.

10. The operation method of claim 8, wherein:
the slave device further includes a memory cell, and
the slave device is configured to perform a read operation or a write operation to the memory cell through an in-band channel that is different from the out-of-band channel.

11. The operation method of claim 10, wherein:
a communication speed of the in-band channel is higher than a communication speed of the out-of-band channel.

12. The operation method of claim 11, wherein:
the in-band channel is implemented based on at least one of a Peripheral Component Interconnect express (PCIe) protocol, a Double Data Rate (DDR) protocol, a Serial Advanced Technology Attachment (SATA) protocol, and aNon Volatile Memory express (NVMe) protocol.

13. An electronic device including memory cells and communicating with an external device through an in-band channel and an out-of-band channel, the electronic device comprising:
a device status sensor configured to sense a status of the electronic device and generate a first status value based on the status for the electronic device;
a status manager configured to receive second status information for the external device through the out-of-band channel, and to output first status information including the first status value to the external device through the out-of-band channel; and
a main controller configured to perform a read operation or a write operation to the memory cells based on a command received through the in-band channel.

14. The electronic device of claim 13, wherein the status manager is configured to control an operation of the main controller based on the first status information and the second status information.

15. The electronic device of claim 13, wherein:
the status manager is configured to operate based on a first voltage received from the external device, and
the main controller is configured to operate based on a second voltage received from the external device, the second voltage being higher than the first voltage.
